# EUROPÄISCHE PATENTSCHRIFT

(11) **EP 0 902 761 B1**
(45) Veröffentlichungstag und Bekanntmachung des Hinweises auf die Patenterteilung: **29.08.2001**
(21) Anmeldenummer: 97926962.8
(22) Anmeldetag: 13.05.1997
(51) Int. Cl.: C02F 3/22, C02F 3/10, C02F 3/06, C02F 3/30

(54) **KLÄRWERK ZUR AUFBEREITUNG VON WASSER**
CLARIFICATION PLANT FOR WATER PURIFICATION
STATION D'EPURATION POUR TRAITEMENT DES EAUX

(30) Priorität: 14.05.1996 DE 19621156
(43) Veröffentlichungstag der Anmeldung: 24.03.1999
(73) Patentinhaber: Lühr, Wolfgang, 13355 Berlin (DE)
(72) Erfinder: Lühr, Wolfgang, 13355 Berlin (DE)
(74) Vertreter: Pfenning, Meinig & Partner
(86) Internationale Anmeldenummer: DE9701010
(87) Internationale Veröffentlichungsnummer: WO9743220

(56) Entgegenhaltungen:
- EP-A- 0 399 380
- CH-A- 655 083
- DE-A- 3 916 250
- DE-U- 29 502 701
- US-A- 3 878 097
- US-A- 4 231 863

## Beschreibung

Die vorliegende Erfindung bezieht sich auf ein Klärwerk zur Aufbereitung von Wasser nach dem Oberbegriff des Anspruchs 1.

Derartige Klärwerke werden zum Reinigen und Aufbereiten von Wässern und Abwässern aus Industrie und Haushalt verwendet. Wesentlich ist dabei, daß eine möglichst vollständige Entfernung von Schadstoffen erfolgt und daß das Wasser nach der Aufbereitung einen hohen Sauerstoffgehalt aufweist. Die Hauptreinigung wird dabei meist durch biologische Abbauprozesse in Mikroorganismen erzielt, die dem Abwasser gezielt zugegeben oder in dem Klärbecken kultiviert werden.

In Produktionsbetrieben fallen organisch hochbelastete Abwässer an, die nach den jeweiligen Ortssatzungen für Indirekteinleiter auf einen vorgegebenen CSB-Grenzwert vorgereinigt werden müssen. Diese Reinigung muß daher auch unter beengten räumlichen Verhältnissen in den Produktionsbetrieben erfolgen.

Für diesen Zweck werden herkömmliche Klärwerke verwendet, bei denen das aufzubereitende Wasser nacheinander in verschiedene Becken geleitet werden. In einem ersten Becken erfolgt eine mechanische Vorklärung des Wassers, das anschließend in ein Becken zur Belüftung mit Sauerstoff geleitet wird. In diesem Belüftungsbecken wird das Wasser mit reinem Sauerstoff oder mit Luft belüftet und so der Sauerstoffgehalt des Wassers erhöht. In diesem Becken oder auch in einem sich anschließenden Becken vollzieht sich die biologische Reinigungsstufe, bei der mit Hilfe von Mikroorganismen die meisten Schadstoffe des aufzubereitenden Wassers abgebaut werden. Bei diesem Prozeß wird sehr viel Sauerstoff durch die Mikroorganismen verbraucht, so daß eine ständige Sauerstoffzufuhr aufrechterhalten werden muß. Um eine Agglomerierung der Mikroorganismen zu größeren biologischen Verbänden und ein Absetzen dieser Mikroorganismen auf den Grund des Behälters zu verhindern, muß das Abwasser ständig gerührt werden. An das biologische Klärbecken schließt sich eine Sedimentationsbereich an, in dem überschüssige Schwebstoffe des Abwassers, wie beispielsweise Agglomerationen von Mikroorganismen als Klärschlamm abgelagert werden. Dieser Bereich des Klärwerks ist als Ruhezone für das aufgereinigte Wasser ausgebildet. Das Wasser, das dem Sedimentationsbecken entnommen wird, ist weitgehend von den Schadstoffen befreit und kann nach einer weiteren Sauerstoffanreicherung an die Umwelt abgegeben werden.

Das beschriebene Klärwerk besitzt einen sehr hohen Raumbedarf, da für die einzelnen Funktionen der Vorklärung, der biologischen Reinigung und der Sedimentation sowie der Sauerstoffanreicherung des geklärten Wassers ein eigenes Becken benötigt wird.

Nachteilig an den Reaktoren nach dem Stand der Technik ist weiterhin, daß zur befriedigenden Anreicherung des zu reinigenden Wassers mit Sauerstoff ein hoher Lufteintrag nötig ist und daß diese Reaktoren einen sehr hohen Energieverbrauch für den Lufteintrag und die Umwälzung der zu reinigenden Flüssigkeit aufweisen.

Aus der US 3 878 097 ist eine Vorrichtung zum Behandeln von kontaminiertem Wasser bekannt, die mehrere in einem Gehäuse vorgesehene Belüftungsabschnitte und Oxidationsabschnitte aufweist, die abwechselnd angeordnet sind und jeweils durch Wände getrennt sind. Im unteren Teil des jeweiligen Belüftungsabschnittes ist ein zylinderförmiger, perforierter Luftzerstäuber vorgesehen, die jeweils mit einer Gasversorgungsleitung verbunden sind und durch die Luft in das darüberliegende Wasser gedrückt wird. In den Oxidationsabschnitten sind Mikroorganismen aufgenommen, wobei eine Füllmasse bzw. Füllelemente vorgesehen sind, an denen sich die Mikroorganismen ansiedeln können.

Aus der DE 295 02 701 ist eine Belüftungsvorrichtung für Abwässer bekannt, die zwei ineinander angeordnete Rohre in einem Behälter aufweist, wobei die Rohre als Steig- und Fallrohr ausgebildet sind. Das zu reinigende Wasser wird dem Behälter zugeführt und das belüftete Wasser abgeführt. Im unteren Bereich des Steigrohrs ist eine Begasungsvorrichtung in Form von Begasungssteinen vorgesehen, die mit einer Druckluftleitung verbunden sind und durch die Luft gedrückt wird. Das Steigrohr ist mit am Boden des Behälters angeordneten offenen Rohrleitungen verbunden, durch die Wasser in das Steigrohr geführt wird.

Aufgabe der vorliegenden Erfindung ist es, ein Klärwerk zur Verfügung zu stellen, das eine hohe Reinigungsleistung bezogen auf Volumen und Zeit, sowie kleine Dimensionen und einen geringen Energieverbrauch aufweist. Weiterhin ist es Aufgabe der vorliegenden Erfindung, ein Klärwerk zur Verfügung zu stellen, das einfach und kostengünstig auf- bzw. abzubauen ist.

Diese Aufgabe wird durch das Klärwerk nach dem Oberbegriff des Anspruchs 1 in Verbindung mit seinen kennzeichnenden Merkmalen gelöst.

Das erfindungsgemäße Klärwerk besteht lediglich aus einem Gehäuse als Flüssigkeitsbehälter, das einen Auf-bereitungsbereich und einen Sedimentationsbereich umschließt und in dem in geeigneter Weise ein Begasungselement und ein mit diesem formschlüssig verbundenes Aufbereitungselement angeordnet sind.

Durch die Oxigenierung des Wassers in dem Begasungselement wird ein Auftrieb innerhalb der zu reinigenden Flüssigkeit erzeugt, so daß die zu reinigende

Flüssigkeit durch das Begasungselement und durch das Aufbereitungselement gefördert wird. Bei dem erfindungsgemäßen Klärwerk erübrigen sich daher mechanische Vorrichtungen zur Förderung und zur Umwälzung des aufzubereitenden Wassers. Dies führt zu einer deutlichen Verringerung der Installations- und Wartungskosten sowie zu einem deutlich geringeren Energieverbrauch des erfindungsgemäßen Klärwerkes. Durch die Oxigenierung des aufzubereitenden Wassers unmittelbar vor der Verwirbelung des Wassers in dem Aufbereitungselement wird weiterhin eine bisher kaum mögliche Sauerstoffsättigung des Wassers erreicht, wodurch die erzielbare biologische Abbauleistung des erfindungsgemäßen Klärwerkes sehr hoch ist. Die Verwirbelung des Wassers in dem Aufbereitungselement führt weiterhin zu einer sehr feinen Verteilung der in dem Abwasser schwebenden Mikroorganismen, da deren Agglomeration stark behindert wird. Es ergibt sich eine große Phasengrenzfläche zwischen den Mikroorganismen und dem Schadstoffsubstrat des aufzubereitenden Wassers, wodurch eine sehr hohe biologische Abbaurate der Schadstoffe erzielt wird.

Bei dem erfindungsgemäßen Klärwerk handelt es sich aufgrund der Strömungsrichtung des aufzubereitenden Wassers von dem Einlaß des Begasungselementes zu dem Auslaß des Aufbereitungselementes und um diese Elemente herum zurück zu dem Einlaß des Begasungselementes um einen Umwälzreaktor. Dabei erfolgt die aerobe biologische Reinigung des Wassers innerhalb des Aufbereitungselementes, während der Rücklauf, der außerhalb der Aufbereitungselemente erfolgt, unter anaeroben Bedingungen unter anderem zu einer Denitrifizierung des Wassers und zu einer Unterdrückung der Bildung von Fadenbakterien führt. Bei dem erfindungsgemäßen Klärwerk sind folglich in demselben Gehäuse auf einfache Art und Weise aerobe und anaerobe Klärstufen in kreislaufartiger Weise hintereinander geschaltet. Die Dauer der jeweiligen Klärstufe kann durch das Volumen der Aufbereitungselemente und durch die von der Oxigenierung des Wassers erzeugte Umwälzgeschwindigkeit beeinflußt werden.

Durch besonders intensive Lufteinleitung über das Begasungselement in periodischen Abständen kann phasenweise der Auftrieb und damit die Umlaufgeschwindigkeit des aufzubereitenden Wassers erhöht werden sowie bei sehr starkem Lufteintrag eine Reinigungswirkung in dem Begasungselement und dem Aufbereitungselement erzielt werden.

Vorteilhafte Weiterbildungen des erfindungsgemäßen Klärwerkes werden in den abhängigen Ansprüchen gegeben.

Besonders einfache Strömungsverhältnisse ergeben sich, wenn das Begasungselement und das Aufbereitungselement vertikal angeordnet sind und dadurch der durch die Oxigenierung des aufzubereitenden Wassers erzeugte Auftrieb maximal ausgenutzt wird.

Die Geometrie, d.h. Höhe, Breite oder Tiefe, des erfindungsmäßen Klärwerkes kann unter Einhaltung der gewünschten Volumina der einzelnen Klärwerkkomponenten und unter Einhaltung der gewünschten Verweildauer in dem Aufbereitungselement dadurch beliebig gewählt werden, daß mehrere Begasungselemente verwendet werden, die mit jeweils einer beliebigen Anzahl von Aufbereitungselementen über Verteiler verbunden sind. Alternativ können auch mehrere Anordnungen aus Begasungselement und Aufbereitungselement übereinander in Serie angeordnet werden. So läßt sich jedes beliebige Aufbereitungsvolumen in beliebiger Dimensionierung auf einfache Art und Weise realisieren.

Vorteilhafterweise ist unterhalb des Begasungselementes ein Sedimentationsbereich angeordnet, der mit einem Biomasseablauf ausgestattet ist, so daß die erzeugte und abgelagerte Biomasse, die für den weiteren Reinigungsprozeß nicht mehr benötigt wird, periodisch aus dem erfindungsgemäßen Klärwerk über den Biomasseablauf entfernt werden kann.

Besonders vorteilhaft ist es, wenn unmittelbar vor dem Wasserablauf durch eine Trennwand eine von der umlaufenden Flüssigkeit abgetrennte Ruhezone eingerichtet wird, die mit schräg stehenden Lamellen ausgestattet ist, so daß dort eine weitere Sedimentationszone entsteht, um Reste der Schwebpartikel in dem gereinigten Wasser zu entfernen.

Die Flußgeschwindigkeit innerhalb des Begasungs- und des Aufbereitungselementes kann auch über eine Tauchpumpe beeinflußt werden, deren Saugseite sich oberhalb des Sedimentationsbereiches und deren Druckseite mit dem Einlaß der Begasungselemente verbunden sind. Weiterhin ist es möglich, innerhalb des Begasungselementes oder des Aufbereitungselementes Rührelemente, Schneckenelemente oder Rotorblätter anzubringen, die von außen angetrieben werden und für eine zusätzliche Förderung bzw. Verwirbelung des aufzubereitenden Wassers sorgen.

Die Regelung der Füllhöhe des erfindungsgemäßen Klärwerkes mit aufzubereitendem Wasser kann durch einen Schwimmerschalter erfolgen.

Zur abschließenden Oxigenierung des aus dem Wasserablauf entnommenen aufbereiteten Wassers kann sich an den Wasserablauf eine Rieselstrecke anschließen, in der das gereinigte Wasser zusätzlich mit Sauerstoff angereichert wird, um den vorgeschriebenen Sauerstoffgehalt zur Einleitung in die Kanalisation bzw. in die Ökosphäre zu erzeugen.

Das Begasungselement, das Aufbereitungselement und das Rieselelement des erfindungsgemäßen Klärwerks können zumindest teilweise aus gleichen oder ähnlichen scheibenförmigen Bauelementen zusammengesetzt sein, so daß sich eine beliebige Skalierbarkeit des Klärwerks ergibt. Dadurch ist das erfindungsgemäße Klärwerk auch für geringste Abwassermengen wirtschaftlich anwendbar. Eine Anpassung an einen veränderten Bedarf kann auch nachträglich erfolgen, da die Montage und Demontage des Begasungselementes und des Aufbereitungselementes sehr einfach sind. Aufgrund der beliebigen Skalierbarkeit des erfindungsgemäßen Klärwerkes können auch die Kosten für die zu erbringende Abwasserklärleistung dem Bedarf jeweils angepaßt und minimiert werden.

Ein besonders einfacher und kostengünstiger Aufbau des Begasungselementes, des Aufbereitungselementes sowie des Rieselelementes ergibt sich durch die Verwendung von Bauelementen, die einen Außenringkanal und einen Innenringkanal sowie mehrere sich zwischen diesen Kanälen erstreckende Stege aufweisen. Die Stege können dabei in den Außenring- und/oder den Innenringkanal münden, so daß sich ein Kanalsystem ergibt, über das beispielsweise Substanzen wie Nährlösungen, Gase oder auch Enzyme zugegeben werden können. Eine derartige Zufuhr ist besonders einfach, wenn die Elemente aus Keramik bestehen und die Keramik eine poröse Struktur besitzt. So besteht das Begasungselement vorteilhafterweise aus derartigen Bauelementen, die eine luftdurchlässige, poröse Struktur aufweisen, so daß über den Außenringkanal und die Stege sehr feine Luftblasen in das aufzubereitende Wasser eingetragen werden können. Durch diese besondere Struktur ergibt sich ein Sauerstoffanreicherungsgrad des aufzubereitenden Wassers, wie er durch herkömmliche Maßnahmen kaum erreicht werden kann. Dies erhöht den Auftrieb vom Begasungselement zu dem Aufbereitungselement und verbessert zusätzlich in der anschließenden aeroben Aufbereitungsstufe die Wirkung der biologischen Reinigung. In ähnlicher Weise können die Bauelemente, aus denen das Aufbereitungselement aufgebaut ist, entsprechend geformte Stege aufweisen, die zu einer gezielten, turbulenten Verwirbelung des aufzubereitenden Wassers führen. Dadurch wird die Agglomeration der Mikroorganismen zu größeren Komplexen verhindert, und es wird eine in der herkömmlichen Technik nicht erreichte Grenzflächengröße zwischen Mikroorganismen und aufzubereitendem Wasser erzielt. Auch dies verbessert die biologische Reinigungswirkung innerhalb des Aufbereitungselementes erheblich. Das Rieselelement kann ebenfalls aus Bauelementen mit entsprechend geformten Stegen aufgebaut werden.

Eine weitere vorteilhafte Ausführungsform der Bauelemente weist im Zentrum des Innenringkanals eine Durchführung auf, die eine sich in der Achse des Bauelementes ersteckende Mittelwelle aufnehmen kann. Bei einzelnen Bauelementen kann dann die Mittelwelle mit den Stegen verbunden sein, so daß die Stege als Rührelemente, Schneckenelemente oder Rotorblätter zur Erzeugung einer Strömung gedreht werden können. Der Antrieb der Mittelwelle erfolgt dabei von außen. Dies stellt eine besonders einfache Möglichkeit dar, die Strömungsgeschwindigkeit in einzelnen Aufbereitungselementen einzeln und unabhängig voneinander zu regulieren.

Die oben beschriebene periodische Einleitung zusätzlicher Mengen von Gasen in die aufzubereitende Flüssigkeit, um einen zusätzlichen Auftrieb oder eine Reinigungswirkung innerhalb des erfindungsggemäßen Klärwerkes zu erzeugen, kann auch über eine zusätzliche Druckluftleitung erfolgen, die an das Begasungselement angeschlossen ist und über entsprechende Bauelemente, die besonders große Poren besitzen, pulsweise große Mengen an Druckluft in die aufzubereitende Flüssigkeit einleitet.

Im folgenden werden einige Ausführungsbeispiele des erfindungsgemäßen Klärwerkes beschrieben.
- Fig. 1: zeigt ein erfindungsgemäßes Klärwerk;
- Fig. 2: zeigt einen Schnitt durch ein erfindungsgemäßes Klärwerk;
- Fig. 3: zeigt eine erfindungsgemäße Anordnung von Begasungselementen und Aufbereitungselementen;
- Fig. 4: zeigt die Verbindung zwischen einem Begasungselement und vier Aufbereitungselementen;
- Fig. 5: zeigt ein weiteres erfindungsgemäßes Klärwerk;
- Fig. 6: zeigt ein weiteres erfindungsgemäßes Klärwerk;
- Fig. 7: zeigt eine erfindungsgemäße Anordnung von Aufbereitungselementen und Begasungselementen;
- Fign. 8a und 8b: zeigen zwei Bauelemente ohne und mit Mittelwellendurchführung;
- Fign. 9a und 9b: zeigen ein Begasungselement im Querschnitt sowie den Verlauf der Sauerstoffzuführung in zwei Varianten;
- Fig. 10: zeigt ein Bauelement mit Mittelwellendurchführung;
- Fig. 11: zeigt ein Rotorelement und
- Fig. 12: zeigt ein Element zur pulsweisen Zuführung von Sauerstoff.

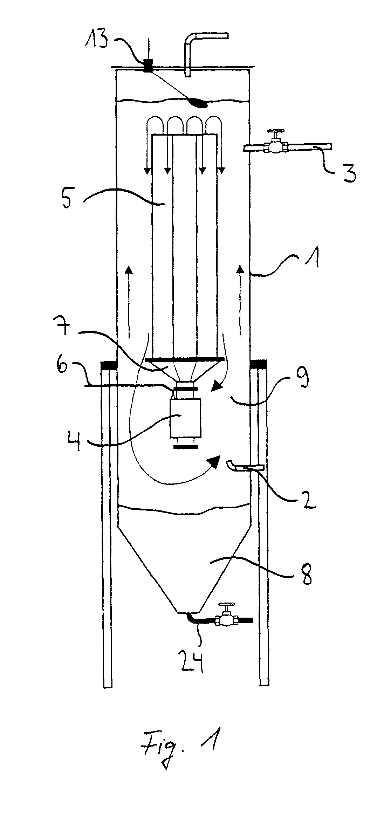

Fig. 1 zeigt ein erfindungsgemäßes Klärwerk. An einem Gehäuse 1 ist ein Wasserzulauf 2 zur Zuführung von aufzubereitendem Wasser sowie ein Wasserablauf 3 als Klarlauf angebracht. Weiterhin sind in dem Gehäuse 1 senkrecht übereinander ein Begasungselement 4 und mehrere Aufbereitungselemente 5 angeordnet, die über einen Verteiler 7 miteinander verbunden sind. Unterhalb des Begasungselementes 4 befindet sich ein Sedimentationsbereich zur Ablagerung von überschüssiger Biomasse. Der Bereich oberhalb des Sedimentationsbereiches 8 wird als Aufbereitungsbereich 9 bezeichnet.

Das Begasungselement 4 ist an eine Gasversorgungsleitung 6 angeschlossen, über die dem Begasungselement 4 der zur Oxigenierung des aufzubereitenden Wassers benötigte Sauerstoff bzw. atmosphärische Luft zugeführt werden.

Zum Betrieb des erfindungsgemäßen Klärwerkes wird über den Wasserzulauf 2 aufzubereitendes Wassers bis zu einem über einen Schwimmerschalter 13 festgelegten Füllstand zugeführt. Anschließend wird über die Gasversorgungsleitung 6 sauerstoffhaltige Luft in das Begasungselement 4 geblasen, so daß die darin befindliche Flüssigkeit einen Auftrieb erfährt und sich durch das Begasungselement 4 zum Aufbereitungselement 5 und durch dieses hindurch bewegt. Durch diese Strömung wird dem Aufbereitungsbereich unmittelbar oberhalb des Sedimentationsbereiches Wasser angesaugt und ebenfalls durch das Begasungselement 6 und den Verteiler 7 in die Aufbereitungselemente 5 gedrückt wird.

In dem Begasungselement 6 wird das aufzubereitende Wasser stark mit Sauerstoff angereichert, so daß in den Aufbereitungselementen 5 ein biologischer, aerober Abbau der Schadstoffe durchgeführt wird. In diesen Aufbereitungselementen wird das Wasser sehr stark verwirbelt, so daß die dort befindlichen Mikroorganismen nicht zu großen Komplexen agglomerieren. Dadurch wird die Grenzfläche zwischen Mikroorganismen und aufzubereitendem Wasser groß gehalten, wodurch die Abbauleistung von Schadstoffen sehr stark erhöht wird.

Nach Durchlaufen der Aufbereitungselemente ist der Sauerstoff in dem aufzubereitenden Wasser weitgehend durch die Mikroorganismen aufgezehrt. Das aufzubereitende Wasser fließt daher unter anoaroben Bedingungen entlang der Außenseite der Aufbereitungselemente 5 zurück in den ebenfalls anaeroben Sedimentationsbereich 8. In diesen anaeroben Bereichen wird das Wasser zusätzlich durch anaerob lebende Mikroorganismen gereinigt, beispielsweise denitrifiziert. Weiterhin erfolgt hier eine Unterdrückung der unerwünschten Bildung von Fadenbakterien.

Beim Abbau der Schadstoffe erhöht sich die Biomasse der Mikroorganismen, so daß nun in dem Sedimentationsbereich 8 die überschüssige Biomasse abgelagert wird. Von dort kann sie nach Belieben über einen Biomasseauslaß 24 als Klärschlamm entfernt werden.

Das aufbereitete Wasser fließt teilweise wieder in das Begasungselement 4 und die Aufbereitungselemente 5 zurück und wird dort weiter gereinigt bzw. vermischt mit neu zugeführtem aufzubereitendem Wasser, oder es wird über den Klarlauf 3 als aufbereitetes Wasser entnommen. Anschließend kann es über eine Rieselstrecke weiter mit Sauerstoff angereichert werden.

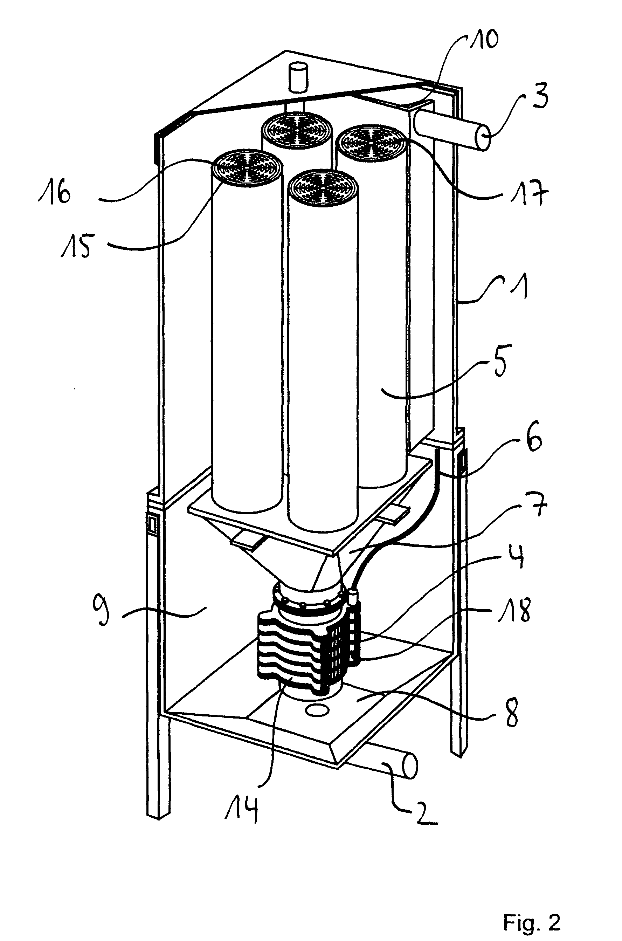

Fig. 2 zeigt ein erfindungsgemäßes Klärwerk mit insgesamt vier Aufbereitungselementen. Der Aufbau dieses erfindungsgemäßen Klärwerks ist im wesentlichen gleich mit dem in Fig. 1 dargestellten Klärwerk. Besonders deutlich ist zu sehen, daß die vier Aufbereitungselemente 5 über einen trichterförmigen Verteiler mit dem Begasungselement 4 verbunden sind. Das Begasungselement besteht aus fünf scheibenförmigen Bauelemente, die an ihrem Umfangsrand insgesamt jeweils vier unter einem Winkel von 90° zueinander versetzte, in Fließrichtung des Wassers orientierte Ausnehmungen besitzen, über die den einzelnen Bauelementen von der Gasversorgungsleitung 6 Sauerstoff unter Druck zugeführt wird.

Die vier Aufbereitungselemente 5 sind aus scheibenförmigen Bauelementen aufgebaut, die einen Außenringkanal 15 und einen Innenringkanal 16 sowie sich radial zwischen diesen Kanälen erstreckende Stege 17 aufweisen. Diese Stege 17 dienen der Verwirbelung des aufzubereitenden Wassers.

Aufgrund des gewählten modularen Prinzips und der Verwendugn modulartiger Bauelemente ist die Montage, Demontage und der Umbau des erfindungsgemäßen Klärwerks mit geringstem Arbeits- und Kostenaufwand jederzeit möglich.

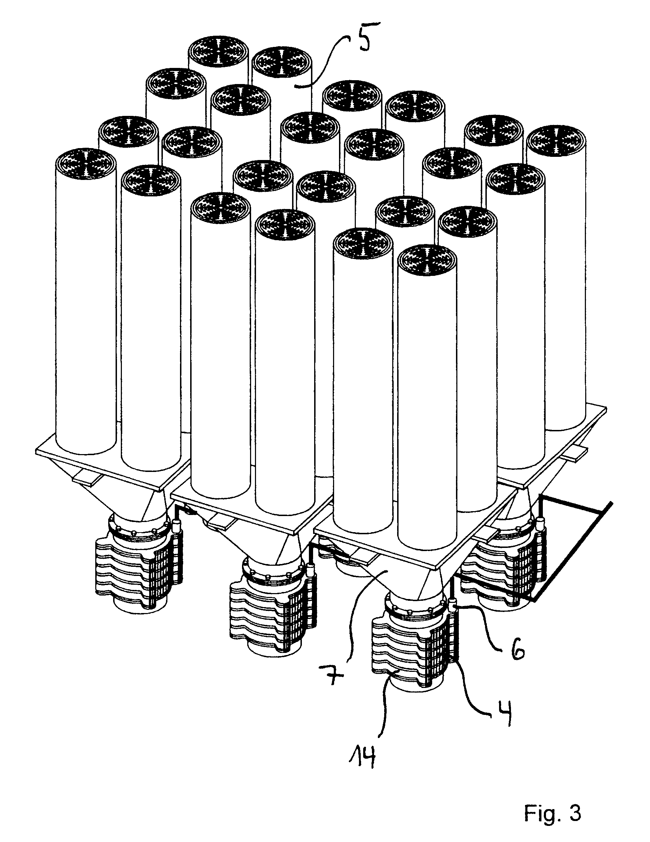

Fig. 3 zeigt eine Anordnung von Begasungselementen 4, Verteilern 7 und Aufbereitungselementen 5 mit insgesamt sechs Begasungselementen 4 und 24 Aufbereitungselementen 5. Eine derartige Anlage ist auch zur Aufreinigung großer Wassermengen geeignet.

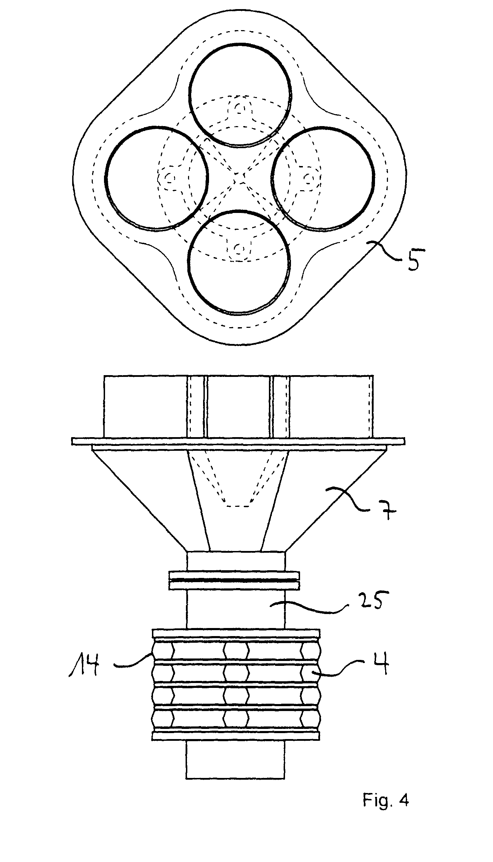

Fig. 4 zeigt im Schnitt wiederum ein aus insgesamt vier scheibenförmigen Elementen 14 aufgebautes Begasungselement 4, das mit seinem Auslaß 25 an einen Verteiler 7 angeflanscht ist. Der Verteiler mündet in insgesamt vier Aufbereitungselemente 7. Durch diese Anordnung wird erreicht, daß die in einem Begasungselement 4 oxigenierte Flüssigkeit anschließend in insgesamt vier Aufbereitungselemente 5 übergeleitet wird.

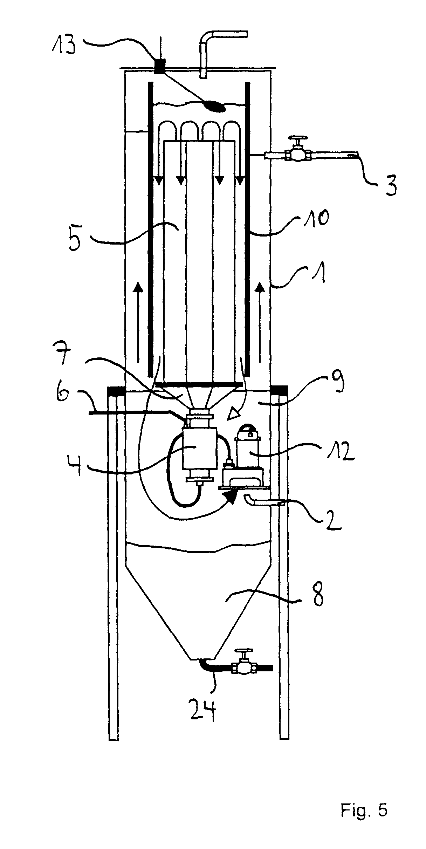

Fig. 5 zeigt ein erfindungsgemäßes Klärwerk, das ähnlich aufgebaut ist wie das in Fig. 1 gezeigte Klärwerk. Dabei bezeichnen gleiche Bezugszeichen gleiche Teile des Klärwerks. Bei diesem Klärwerk ist der Zulauf zu dem Klarlauf 3 von den Aufbereitungselementen 5 über eine Wandung 10 abgetrennt, so daß sich unmittelbar vor dem Klarlauf 3 zwischen dem Gehäuse 1 und der Wandung 10 eine zusätzliche Ruhezone ergibt. An der Wandung 10 und an dem Gehäuse 1 können in dieser Ruhezone schräg aufwärts gerichtete Lamellen, beispielsweise unter 30° zur Wandung 10, angebracht sein, so daß auf diesen Lamellen restliche Schwebstoffe, die sich noch in dem aufbereiteten Wasser befinden, abgelagert werden. So ergibt sich unmittelbar vor dem Klarlauf 3 ein zusätzlicher Restsedimentationsbereich.

Weiterhin ist der Einlaß des Begasungselementes 4 mit der Druckseite einer Saugpumpe 12 verbunden, deren Saugseite im Zwischenbereich zwischen dem Sedimentationsbereich 8 und dem Aufbereitungsbereich 9 liegt. Durch die Unterwasserpumpe 12 kann die Flußgeschwindigkeit des aufzubereitenden Wassers durch das Begasungselement 4 und die Aufbereitungselemente 5 zusätzlich gesteuert werden, wodurch ebenfalls der Oxigenierungsgrad des Wassers in dem Begasungselement 4 beeinflußt werden kann.

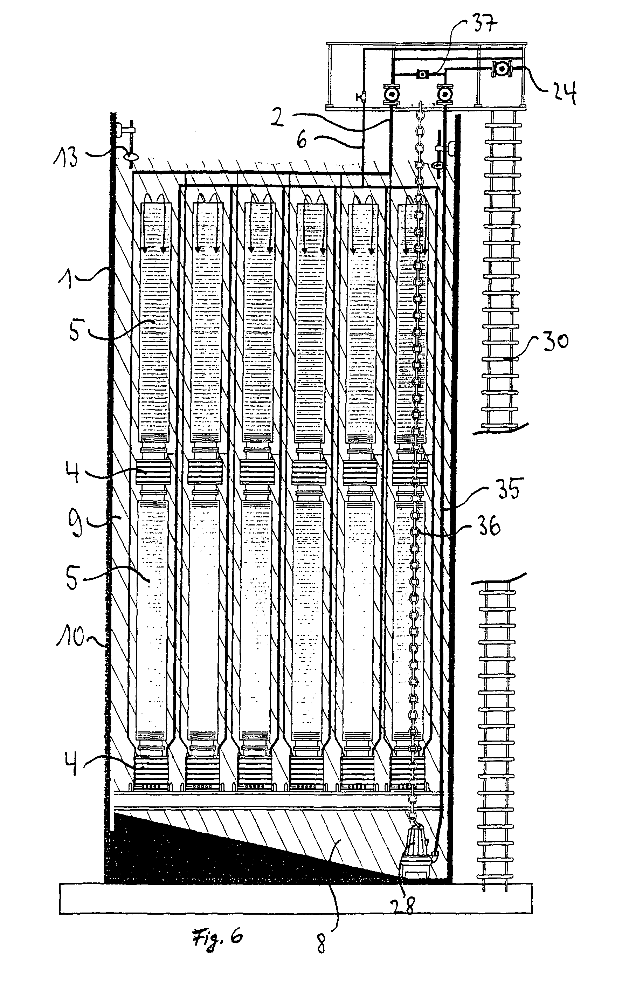

Fig. 6 zeigt ein weiteres Beispiel eines erfindungsgemäßen Klärwerkes, bei dem von außen zugängliche Bedienelemente oberhalb des Gehäuses 1 angeordnet und über eine Leiter 30 zugänglich sind. Das Gehäuse 1 umschließt hier eine Vielzahl von Aufbereitungselementen 5, die an ihrem jeweiligen unteren Ende formschlüssig mit Begasungselementen 4 verbunden sind. Dabei sind mehrere der Einheiten aus Begasungselement 4 und Aufbereitungselement 5 übereinander angeordnet und so miteinander verbunden, daß das aufzureinigende Wasser von dem jeweiligen unteren Aufbereitungselement 5 durch ein Begasungselement 4 in das nächste Aufbereitungselement 5 fließt. Die Begasungselemente sind mit einer Druckluftversorgung 6 verbunden. Das an unterster Stelle befindliche Begasungselement 4 besitzt einen weiteren Anschluß, der mit der Abwasserzufuhrleitung 2 verbunden ist. Durch diese Leitung 2 wird das Abwasser unmittelbar in das unterste Begasungselement 4 eingeleitet, wo es ein erstes Mal mit Sauerstoff angereichert wird. Die Zufuhr von Abwasser wird über einen Schwimmerschalter 13 geregelt.

Auch bei diesem Klärwerk strömt nun das mit Sauerstoff angereicherte Wasser durch das Aufbereitungselement 5 nach oben, in dem eine biologische Klärung stattfindet. Am Ende des ersten Aufbereitungselementes ist der Sauerstoffgehalt des Wassers durch die Mikroorganismen weitgehend aufgebraucht, so daß das nun schon weitgehend vorgereinigte Wasser ein zweites Mal in einem Begasungselement 4 mit Sauerstoff versetzt wird. Anschließend durchläuft es ein oberes Aufbereitungselement 5. Am Ende dieser Reinigung tritt das Wasser am oberen Ende des oberen Aufbereitungselementes 5 aus und strömt entlang der Außenseite der Aufbereitungselemente 5 nach unten in den Sedimentationsbereich 8. In diesem Sedimentationsbereich 8 lagert sich dann der Überschuß an Mikroorganismen ab und kann bei Bedarf durch eine Unterwasserpumpe 28 und über eine Leitung 35 sowie den Biomasseauslaß 24 entfernt werden. Die Pumpe 28 kann beispielsweise über eine durch das Gehäuse 1 sich erstreckende Kette 36 von oberhalb des Gehäuses 1 betätigt werden. Zwischen der Klärschlammleitung 35 und der Abwasserzuleitung 2 besteht eine Verbindungsleitung 37, über die das Abwasser kontinuierlich bzw. von Zeit zu Zeit mit Klärschlamm und damit mit lebenden Mikroorganismen beimpft werden kann.

Die in Fig. 6 gezeigte Anlage ist insbesondere geeignet, um hochbelastete Abwässer auf kleinem Raum und mit geringem Energieaufwand möglichst vollständig zu reinigen. Durch die Übereinanderanordnung der Einheiten aus Begasungselementen 4 und Aufbereitungselementen 5 wird eine sehr lange Reinigungsstrecke erzielt.

Bei der Reinigung des Abwassers entsteht durch den Stoffwechsel der Mikroorganismen Wärme, so daß sich die Temperatur des Abwassers entlang der Aufbereitungselemente ändert. Mit Hilfe von Wärmetauschern, die ebenfals aus einzelnen Bauelementen bestehen, kann jedoch die Temperatur so geregelt werden, daß überall in den Aufbereitungselementen die für die gewünschte, schadstoffspezifischen Mikroorganismen optimalen Temperaturen weitgehend eingehalten werden.

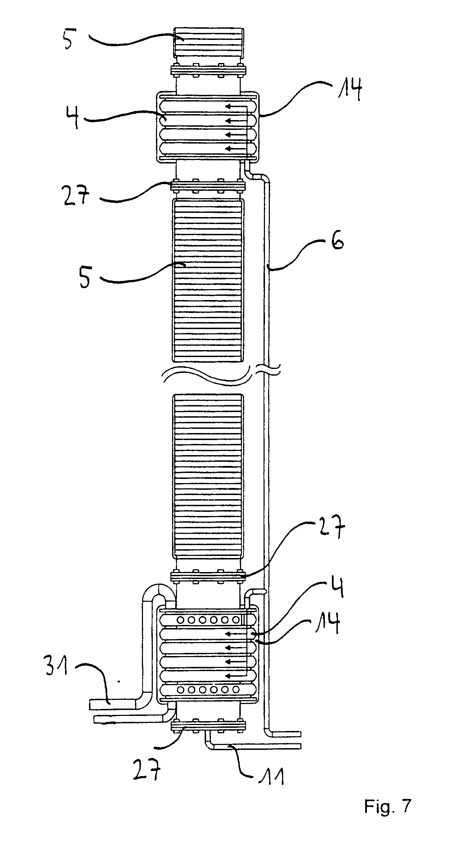

Fig. 7 zeigt eine erfindungsgemäße Anordnung von Aufbereitungselementen 5 und Begasungselementen 4. Abwechselnd sind jeweils ein Begasungselement 4 und ein Aufbereitungselement 5 formschlüssig miteinander verbunden. Dadurch ergibt sich eine sehr lange Säule, die aus einer alternierenden Abfolge von Begasungselementen 4 und Aufbereitungselementen 5 besteht. Die Begasungselemente 4 bestehen aus einer Abfolge von scheibenförmigen Bauelementen 14. Das unterste Begasungselement 4 besteht aus sechs Bauelementen 14, während die weiteren Begasungselemente der Säule aus jeweils vier Bauelementen bestehen. Jeweils vier der Bauelemente der Begasungselemente 4 sind mit einer Gasversorgungsleitung 6 verbunden. In dem untersten Begasungselement 4 ist ein Bauelement mit einer Zufuhrleitung für Abwasser und ein weiteres Bauelement 14 mit einer Zufuhrleitung für Klärschlamm verbunden. Dieses unterste Begasungselement 4 besitzt an seinem Eingang einen Flansch 27, der mit einer zweiten Druckgasversorgungsleitung verbunden ist.

Über die Leitung 31 wird über eines der Bauelemente 14 des untersten Begasungselementes 4 Abwasser in das Innere des Begasungselementes eingeleitet. Über die Leitung 22 wird über ein weiteres Bauelement 14 des untersten Begasungselementes 4 Klärschlamm dem Abwasser zugesetzt, um dieses mit lebenden Mikroorganismen zur biologischen Reinigung zu beimpfen.

Die restlichen vier Bauelemente 14 des Begasungselementes 4 dienen der Oxigenierung des Abwassers durch Zufuhr von atmosphärischer Druckluft oder reinem Sauerstoff über die Gasversorgungsleitung 6.

Diese Gasversorgungsleitung 6 ist ebenfalls mit den Bauelementen 14 der weiteren Begasungselementen 4 verbunden und sorgt für eine entlang der Säule periodische Belüftung des Abwassers.

Um die Säule aus Begasungselementen 4 und Aufbereitungselementen 5 bei Bedarf zu reinigen, ist das unterste Begasungselement 4 mit einer zweiten Druckgasversorgungsleitung 11 verbunden, über die große Mengen an Luft eingeblasen werden können. Derartige große Mengen an Luft erzeugen einen zusätzlichen Auftrieb der in der Säule befindlichen Flüssigkeit und führen zu einer guten mechanischen Reinigung der Säule.

Die in Fig. 7 gezeigte Anordnung kann mit einem Sedimentationsbereich und einem Gehäuse versehen werden und stellt dann eine erfindungsgemäße Vorrichtung dar, die sich durch eine hohe Reinigungsleistung auf kleinstem Raum auszeichnet.

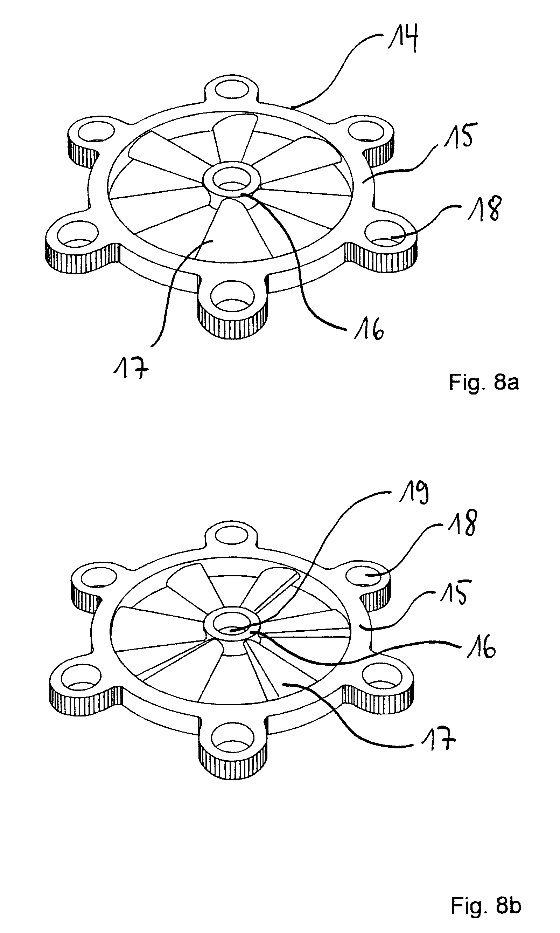

Die Fign. 8a und 8b zeigen zwei scheibenförmige Bauelemente, wie sie zum Bau von Begasungselementen oder Aufbereitungselementen wie beispielsweise in den Fign. 1 und 2 gezeigt, verwendet werden. Fig. 8a zeigt ein Bauelement 14 mit einem Außenringkanal 15 und einem Innenringkanal 16 sowie sich zwischen diesen Kanälen radial erstreckenden Stegen 17. Weiterhin besitzt das Bauelement 14 in diesem Beispiel insgesamt sechs axiale Aussparungen 18, über die mehrere übereinander gestapelte Bauelemente 14 miteinander verbunden bzw. über die zwischen mehreren übereinander gestapelten Bauelementen 14 Stoffe ausgetauscht werden können. Durch diese axialen Aussparungen 18 kann beispielsweise längs einer Säule aus erfindungsgemäßen Bauelementen 14 eine Flüssigkeit mit Enzymen jedem Bauelement 14 zugeleitet werden oder ein Gas in die mit den axialen Aussparungen 18 verbundenen Außenringkanäle 15 und von dort in mit den Außenringkanälen verbundene Stege 17 geleitet werden. Sind die Stege 17 aus porösem, beispielsweise keramischem Material, so können auf diese Art und Weise große Mengen Gase in sehr feiner Verteilung in eine innerhalb des Bauelementes 14 fließende Flüssigkeit gedrückt werden.

Diese Möglichkeit wird genutzt, indem wie in Fig. 8a gezeigte Bauelemente zum Aufbau des Begasungselementes 4 aus Fig. 1 verwendet werden. Die Gasversorgungsleitung 6 wird dann an einem Ende an eine der axialen Aussparungen 18 eines Bauelementestapels angeschlossen, während die übrigen freiliegenden Öffnungen der axialen Aussparungen 18 verschlossen werden. Wird nun über die Gasversorgungsleitung 6 Sauerstoff bzw. atmosphärische Luft in die axialen Aussparungen eingeleitet, so verteilt sich diese Luft über die Außenringkanäle 15 in den Stegen 17 und wird durch die poröse, keramische Wandung der Stege 17 in das aufzubereitende Wasser gedrückt.

Fig. 8b zeigt ein ähnliches Bauelement wie in Fig. 8a, wobei der Innenringkanal 16 eine Durchführung 19 aufweist, die eine Mittelwelle aufnehmen kann.

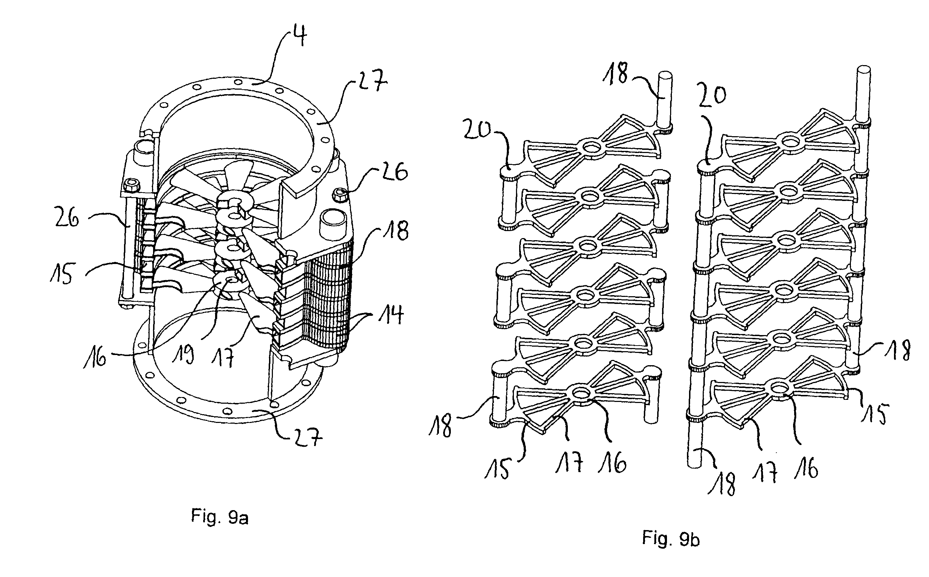

Fig. 9a zeigt den Aufbau eines Begasungselementes aus den in Fig. 8b dargestellten Bauelementen 14. Die Bauelemente 14 sind aufeinandergestapelt und zwischen den einzelnen axialen Aussparungen 18 über Schraubverbindungen 26 miteinander verschraubt. Die axialen Aussparungen 18 der einzelnen Bauelemente 14 sind untereinander verbunden, während ihre offenliegenden Enden verschlossen sind.

Das Begasungselement 4 ist an seinen beiden Enden mit jeweils einem Flansch 27 versehen, so daß es an seinem Einlaß beispielsweise mit einer Tauchpumpe 12 und an seinem Auslaß mit einem Verteiler 7 bzw. auch direkt mit einem Aufbereitungselement 5 verbunden werden kann.

Fig. 9b zeigt zwei der vielen Möglichkeiten der Gasführung innerhalb des Begasungselementes 4. Dafür werden die Bauelemente 14 zwischen den einzelnen axialen Aussparungen 18 und zwischen den axialen Aussparungen und dem Außenringkanal 15 mit durchbrechbaren Dichtungen versehen, die zur Erzeugung einer bestimmten Fließrichtung auf einfach Art und Weise zerstört werden können. Dadurch ist es möglich, innerhalb eines derartigen Begasungselementes 4 eine große Zahl von Gasführungsmöglichkeiten zu realisieren, von denen zwei in Fig. 9b gezeigt sind. In der linken Darstellung von Fig. 9b wird das Gas jeweils von einer axialen Aussparung 18 über die Stege 17 und die Außenringkanäle 15 der gegenüberliegenden Aussparung 18 zugeführt. Dort wird das Gas innerhalb der axialen Aussparung 18 zu dem nächsten Bauelement 14 geleitet, wo wiederum ein Seitenwechsel erfolgt. Dadurch erfolgt eine Gasführung nach dem Gegenstromprinzip durch das Begasungselement. In der rechten Abbildung von Fig. 9b wird das Gas über eine axiale Aussparung 18 zugleich sämtlichen Bauelementen 14 des Begasungselementes 4 zugeführt und parallel zu den gegenüberliegenden axialen Aussparungen 18 geleitet.

Eine derartige Anordnung von Bauelementen 14 kann auch für den Aufbau der Aufbereitungselemente 5 gewählt werden, wobei das Kanalsystem der Bauelemente 14 beispielsweise zur Zufuhr von Enzymen oder Nährlösungen zu der aufzubereitenden Flüssigkeit genutzt werden kann.

Mit einem wie in Fig. 9a gezeigten Begasungselement wurde ein O₂-Eintrag von über 34 mg O₂/l erzielt. Dieser Wert liegt um das 4-fache über dem durch herkömmliche Membrantechnologie erreichbaren Wert von 8 mg O₂/l.

Untersuchungen eines Reaktors, dessen Begasungselemente und dessen Aufbereitungselemente aus den genannten Bauelementen aufgebaut sind, ergaben, daß bei einem Abbaugrad von 90 % das Aufbereitungselement eine Reinigungsleistung von ca. 80 kg CSB/m³/d aufweist. Dieser Wert liegt um das Doppelte über der Raumbelastsung, die mit einem herkömmlichen Blasensäulenreaktor im Laborversuch erzielt wird. Auch die CSB-Schlammbelastung B_{TS} erreicht mit ca. 11 kg CSB/kg TS/d etwa den doppelten Wert eines Blasensäulenreaktors. Ein Vergleich der Bakterienagglomerate zeigt, daß die Agglomerate bei dem erfindungsgemäßen Klärwerk kleiner sind als bei einem Blasensäulenreaktor oder bei herkömmlichen Kläranlagen, so daß sich eine größere Grenzfläche zwischen den Mikroorganismen und dem aufzubereitenden Wasser bezogen auf die Mikroorganismenmenge als bei herkömmlichen Klärtechnologie ergibt.

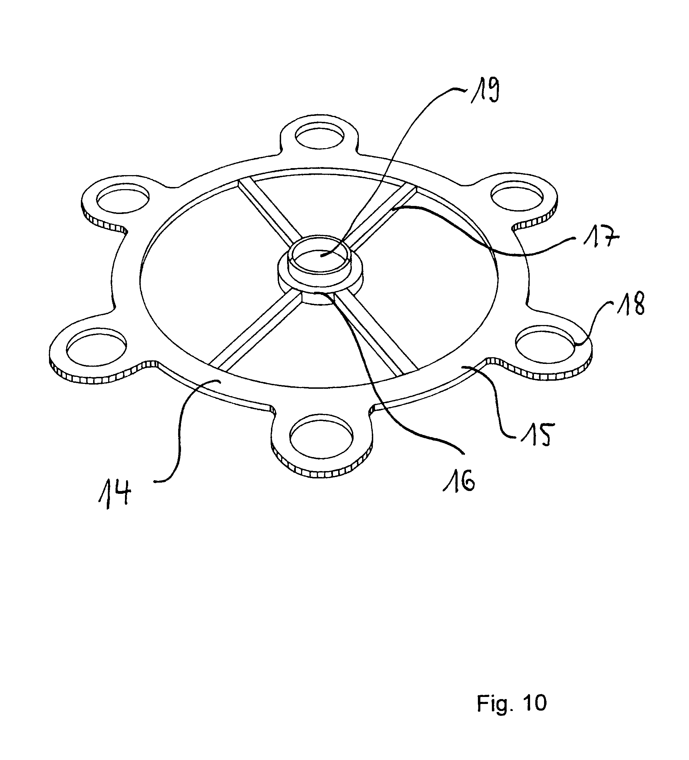

Fig. 10 zeigt ein weiteres erfindungsgemäßes Bauelement 14, dessen Innenring 16 mit einer Durchführung 19 für eine Mittelwelle versehen ist. Die Stege sind dabei sehr dünn ausgeführt und dienen im wesentlichen der Halterung des Innenringes 16. Derartige Bauelemente 14 können beispielsweise zur Lagerung einer Mittelwelle an den jeweiligen Enden der Aufbereitungselemente 5 verwendet werden.

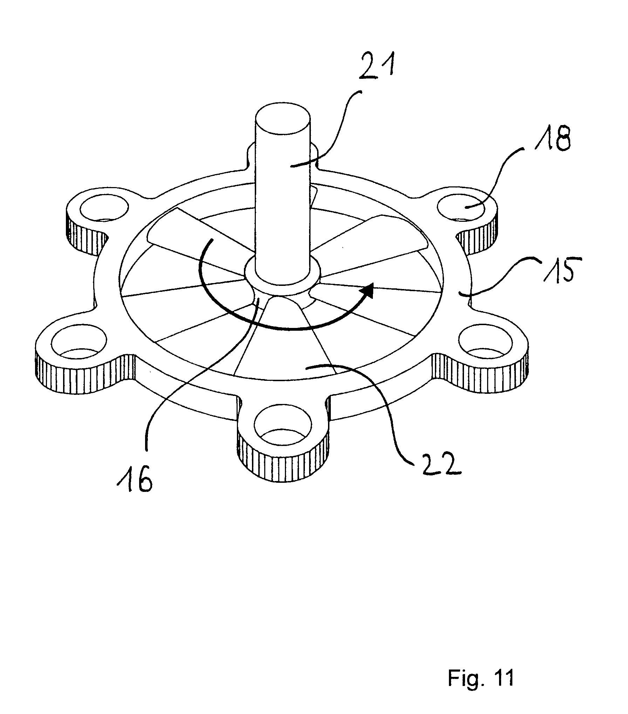

Fig. 11 zeigt ein Rotorelement, das eine Mittelwelle 21 sowie an der Mittelwelle 21 befestigte, frei drehende Stege 22 als Rotorblätter aufweist. Mit einem derartigen Rotorelement können Strömungen in Flüssigkeiten innerhalb der Aufbereitungs- bzw. Begasungselemente erzeugt werden. Damit läßt sich insbesondere die Strömungsgeschwindigkeit in jedem einzelnen Aufbereitungselement unabhängig von den anderen Aufbereitungselementen steuern.

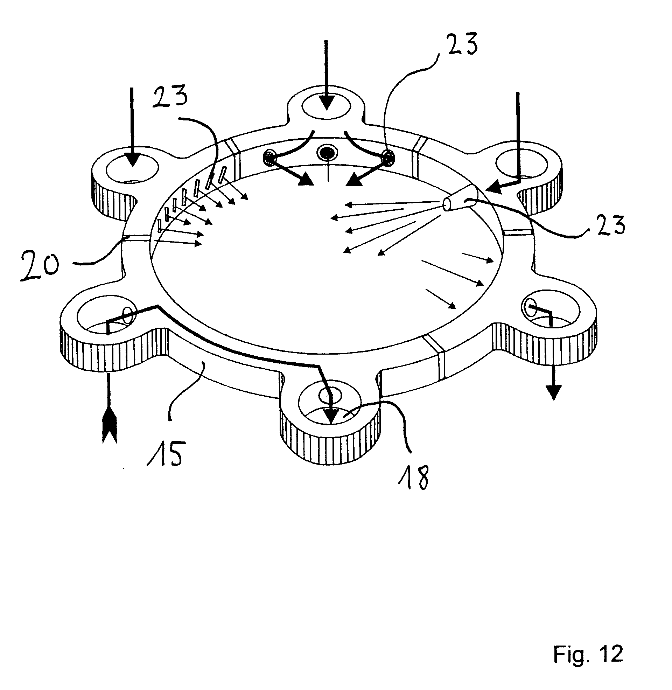

Fig. 12 zeigt ein Einblaselement, wie es benutzt werden kann, um pulsweise große Mengen von Gasen beispielsweise in das Begasungselement 4 einzublasen. Das Gas wird wiederum über axiale Ausnehmungen 18 in den Außenringkanal 15 geleitet und von dort über Öffnungen 23 in die innerhalb des Einblaselementes strömende Flüssigkeit eingeblasen. Dargestellt sind insgesamt drei verschiedene Formen für Öffnungen 23, nämlich Schlitze, runde Öffnungen sowie düsenförmig radial von dem Außenringkanal 15 in das Innenvolumen ragende Öffnungen. Derartige Bauelemente können insbesondere zum Eintrag hoher Gasmengen für eine Erhöhung des Auftriebs der Flüssigkeit oder für eine gründliche Reinigung der Begasungselemente 4 und der Aufbereitungselemente 5 verwendet werden.

Weiterhin ist in Fig. 12 dargestellt, daß der Außenringkanal durch Dichtungen 20 unterbrochen werden kann, so daß auch mehrere Gase und Flüssigkeiten in Packungsrichtung der Bauelemente unabhängig voneinander über die axialen Aussparungen 18 geführt werden können. Die unterschiedlichen Strömungen sind durch Pfeile dargestellt. Dieses Bauelement kann mit jedem der beschriebenen Bauelemente verbunden werden.

## Patentansprüche

1. Klärwerk zur Aufbereitung von Wasser mit einem einen Wasserzulauf (2) und einen Wasserablauf (3) aufweisenden Behälter (1), dessen Innenraum einen Aufbereitungsbereich (9) und einen darunter angeordneten Sedimentationsbereich (8) umfaßt, wobei in dem Aufbereitungsbereich mindestens ein Begasungselement (4) zur Oxigenierung des Wassers und mindestens ein Aufbereitungselement (5) angeordnet sind,
**dadurch gekennzeichnet**, daß das mindestens eine Begasungselement (4) und das mindestens eine Aufbereitungselement (5) säulenartig übereinander angeordnet sind und zwischen diesen und der Wandung des Behälters ein Teil des Aufbereitungsbereichs liegt, daß das Begasungselement (4) mit mindestens einem Wassereinlaß und mindestens einem Wasserauslaß versehen ist und mehrere scheibenförmige, zu einem Stapel miteinander verbundene Bauelemente (14) aufweist, durch die sich das Wasser hindurchbewegt, wobei der Wassereinlaß zumindest eines Begasungselementes (4) mit dem Sedimentationsbereich (8) in Verbindung steht, und daß das mindestens eine Aufbereitungselement (5) mit einem Einlaß und einem Auslaß versehen ist und der Wasserauslaß des Begasungselementes (4) mit dem Einlaß mindestens eines Aufbereitungselementes formschlüssig verbunden ist, wobei das aus dem Begasungselement (4) austretende Wasser beim Durchströmen durch das Aufbereitungselement (5) gezielt verwirbelt und durchmischt wird und nach Austritt aus dem Aufbereitungselement zwischen seiner Außenseite und der Wandung des Behälters zum Sedimentationsbereich strömt.

2. Klärwerk nach Anspruch 1, **dadurch gekennzeichnet**, daß der Auslaß des oder eines Aufbereitungselementes (5) mit dem Einlaß eines weiteren Begasungselementes (4) verbunden ist, an das sich ein weiteres Aufbereitungselement (5) anschließt.

3. Klärwerk nach mindestens einem der vorgehenden Ansprüche, **dadurch gekennzeichnet**, daß mehrere Begasungselemente und Aufbereitungselemente abwechselnd zu einer Säule übereinander angeordnet sind.

4. Klärwerk nach mindestens einem der vorhergehenden Ansprüche, **dadurch gekennzeichnet**, daß jedes Begasungselement (4) über einen Verteiler (7) mit mehreren Aufbereitungselementen (5) verbunden ist.

5. Klärwerk nach mindestens einem der vorhergehenden Ansprüche, **dadurch gekennzeichnet**, daß der Wasserablauf von dem Aufbereitungsbereich (9) durch eine Wandung (10) abgetrennt ist, wobei der abgetrennte Teil in der Nähe des Sedimentationsbereiches (8) mit dem Aufbereitungs- und/oder dem Sedimentationsbereich (8) kommuniziert.

6. Klärwerk nach Anspruch 5, **dadurch gekennzeichnet**, daß in dem abgetrennten Teil der Behälter (1) und/oder die Wandung (10) mit sich nach oben erstreckenden Lamellen versehen sind.

7. Klärwerk nach mindestens einem der vorhergehenden Ansprüche, **dadurch gekennzeichnet**, daß der Einlaß des Begasungselementes (4) mit der Druckseite einer in dem Behälter (1) angeordneten Tauchpumpe (12) verbunden ist, deren Ansaugstutzen sich zwischen dem Sedimentationsbereich und dem Aufbereitungsbereich (9) befindet.

8. Klärwerk nach mindestens einem der vorhergehenden Ansprüche, **dadurch gekennzeichnet**, daß das Begasungselement (4) und/oder das Aufbereitungselement (5) zumindest teilweise aus einem Stapel formschlüssiger, miteinander verbundener, einander gleicher oder zumindest ähnlicher, scheibenförmiger Bauelemente (14) bestehen.

9. Klärwerk nach Anspruch 8, **dadurch gekennzeichnet**, daß die Bauelemente (14) jeweils mindestens einen jeweils mindestens einenAußenringkanal (15) und Innenringkanal (16) und mehrere Stege aufweisen, die sich radial zwischen dem Außenringkanal (15) und dem Innenringkanal (16) erstrecken.

10. Klärwerk nach Anspruch 9, **dadurch gekennzeichnet**, daß die Stege (17) in den Außenringkanal (15) und/oder den Innenringkanal (16) münden.

11. Klärwerk nach Anspruch 9 und 10, **dadurch gekennzeichnet**, daß die Bauelemente (14) zumindest eine axial verlaufende Aussparung (18) außerhalb des Außenringkanals (15) aufweisen.

12. Klärwerk nach mindestens einem der Ansprüche 9 bis 11, **dadurch gekennzeichnet**, daß die Kanäle die axialen Aussparungen (18) und die Stege (17) durch entfernbare bzw. durch brechbare Trennwände voneinander abgetrennt und durch Entfernen bzw. Durchbrechen der Trennwände (20) miteinander verbunden sind, so daß nur eine vorbestimmte Auswahl der Kanäle, Aussparungen (18) und Stege (17) miteinander kommunizieren.

13. Klärwerk nach mindestens einem der Ansprüche 9 bis 12, **dadurch gekennzeichnet**, daß die Stege (17) eine poröse, luftdurchlässige Struktur besitzen.

14. Klärwerk nach mindestens einem der Ansprüche 9 bis 12, **dadurch gekennzeichnet**, daß die Bauelemente (14) zumindest teilweise im Zentrum des Innenringkanals (16) eine Durchführung (19) für die Aufnahme einer sich längs des Stapels erstreckenden Mittelwelle (21) aufweisen.

15. Klärwerk nach Anspruch 14, **dadurch gekennzeichnet**, daß an der Mittelwelle (21) in einem Teil der Bauelemente (14) Rührelemente, Schneckenelemente oder Rotorblätter (22) zur Erzeugung einer Strömung angebracht sind, die sich von der Mittelwelle (21) ausgehend in den Zwischenraum zwischen dem Innen(16) und dem Außenringkanal (15) erstrecken.

## Claims

1. Clarification plant for purification of water, comprising a container (1) with a water inlet (2) and a water outlet (3), the inside area of which includes a purification area (9) and therebelow a sedimentation area (8), and in the purification area are arranged at least one gassing element (4) for oxygenation of the water and at least one purification element (5), **characterised in that** the at least one gassing element (4) and the at least one purification element (5) are like a column arranged on top of each other, and between them and the wall of the container lies a part of the purification area, and the gassing element (4) is provided with at least one water inlet and at least one water outlet and comprises a plurality of discshaped assembly elements (14) which are joined so as to form a stack and through which moves the water, and the water inlet of at least one gassing element (4) is connected to the sedimentation area (8), and the at least one purification element (5) is provided with an inlet and an outlet, and the water outlet of the gassing element (4) is positively connected to the inlet of at least one purification element, and water exiting the gassing element (4) is, whilst flowing through the purification element (5), swirled under control and mixed and, after having exited the purification element, flows between its outside and the wall of the container to the sedimentation area.

2. Clarification plant according to Claim 1, **characterised in that** the outlet of the/one purification element (5) is connected to the inlet of an additional gassing element (4) which is linked to an additional purification element (5).

3. Clarification plant according to at least one of the above claims, **characterised in that** a plurality of gassing elements and purification elements are arranged alternately on top of each other so as to form a column.

4. Clarification plant according to at least one of the above claims, **characterised in that** each gassing element (4) is connected via a distributor (7) to a plurality of purification elements (5).

5. Clarification plant according to at least one of the above claims, **characterised in that** the water discharge from the purification area (9) is separated by a wall (10), and the separated part communicates in the vicinity of the sedimentation area (8) with the purification and/or sedimentation area (8).

6. Clarification plant according to Claim 5, **characterised in that** the container (1) and/or the wall (10) is/are in the separated part provided with upwardly extending laminae.

7. Clarification plant according to at least one of the above claims, **characterised in that** the inlet of the gassing element (4) is connected to the pressureside of an immersion pump (12) which is arranged in the container (1), the suction socket of which is located between the sedimentation area and the purification area (9).

8. Clarification plant according to at least one of the above claims, **characterised in that** the gassing element (4) and/or the purification element (5) is/are at least partially composed of a stack of flush and interconnected, either identical or at least similar discshaped assembly elements (14).

9. Purification plant according to Claim 8, **characterised in that** the assembly elements (14) comprise respectively at least one outer ring channel (15) and one inner ring channel (16) and a plurality of webs which extend radially between the outer ring channel (15) and the inner ring channel (16).

10. Purification plant according to Claim 9, **characterised in that** the webs (17) terminate in the outer ring channel (15) and/or in the inner ring channel (16).

11. Purification plant according to Claim 9 and 10, **characterised in that** the assembly elements (14) comprise at least one axially extending cutout (18) outside the outer ring channel (15).

12. Purification plant according to at least one of Claims 9 to 11, **characterised in that** the channels, the axial cutouts (18) and the webs (17) are separated from each other by removable or breakable separating walls and connected to each other by way of removing or breaking through the separating walls (20), so that only a predetermined selection of channels, cutouts (18) and webs (17) communicates with each other.

13. Purification plant according to at least one of Claims 9 to 12, **characterised in that** the webs (17) are of a porous, air-permeable structure.

14. Purification plant according to at least one of Claims 9 to 12, **characterised in that** the assembly elements (14) have at least partially in the centre of the inner ring channel (16) a passage (19) for accommodating a central shaft (21) which extends along the stack.

15. Purification plant according to Claim 14, **characterised in that** in a part of the assembly elements (14) are attached to the central shaft (21) agitating elements, helical elements or rotor blades (22) for generating a flow which extends from the central shaft (21) into the intermediate space between the inner ring channel (16) and the outer ring channel (15).

## Revendications

1. Station d'épuration pour le traitement de l'eau comportant un récipient (1), qui possède une amenée (2) pour l'eau et une sortie (3) pour l'eau et dont l'espace intérieur comprend une zone de traitement (9) et une zone de sédimentation (8) située au-dessous de la précédente, au moins un élément (4) d'application d'un gaz servant à oxygéner l'eau et au moins un élément de traitement (5) étant disposés dans la zone de traitement, **caractérisée en ce que** le au moins un élément (4) d'application d'un gaz et le au moins un élément de traitement (5) sont disposés en superposition sous la forme d'une colonne, en ce qu'une partie de la zone de traitement est située entre ces éléments et la paroi du récipient, en ce que l'élément (4) d'application d'un gaz comporte au moins une entrée pour l'eau et au moins une sortie pour l'eau et comporte plusieurs composants en forme de disques (14), qui sont reliés entre eux pour former une pile, et à travers lesquels l'eau circule, l'entrée pour l'eau d'au moins un élément (4) d'application d'un gaz étant reliée à la zone de sédimentation (8) et en ce que le au moins un élément de traitement (5) est pourvu d'une entrée et d'une sortie et en ce que la sortie pour l'eau de l'élément (4) d'application d'un gaz est reliée selon une liaison par formes complémentaires à l'entrée d'au moins un élément de traitement, l'eau sortant de l'élément (4) d'application d'un gaz étant amenée à tourbillonner et étant mélangée d'une manière ciblée lorsqu'elle traverse l'élément de traitement (5) et circulant, une fois sortie de l'élément de traitement, entre la face extérieure de l'élément de traitement et la paroi du récipient en direction de la zone de sédimentation.

2. Station d'épuration selon la revendication 1, **caractérisée en ce que** la sortie du ou d'un élément de traitement (5) est reliée à l'entrée d'un autre élément (4) d'application d'un gaz, auquel est raccordé un autre élément de traitement (5).

3. Station d'épuration selon au moins l'une des revendications précédentes, **caractérisée en ce que** plusieurs éléments d'application d'un gaz et plusieurs éléments de traitement sont disposés alternativement d'une manière superposée pour former une colonne.

4. Station d'épuration selon au moins l'une des revendications précédentes, **caractérisée en ce que** chaque élément (4) d'application d'un gaz est relié, par l'intermédiaire d'un distributeur (7), à plusieurs éléments de traitement (5).

5. Station d'épuration selon au moins l'une des revendications précédentes, **caractérisée en ce que** l'évacuation pour l'eau est séparée de la zone de traitement (9), par une paroi (10), la partie séparée située à proximité de la zone de sédimentation (8) communiquant avec la zone de traitement et/ou de sédimentation (8).

6. Station d'épuration selon la revendication 5, **caractérisée en ce que** dans la partie séparée, le récipient (1) ou la paroi (10) sont pourvus de lamelles qui s'étendent vers le haut.

7. Station d'épuration selon au moins l'une des revendications précédentes, **caractérisée en ce que** l'entrée de l'élément (4) d'application d'un gaz est reliée au côté refoulement d'une pompe immergée (12) disposée dans le récipient (1) et dont la tubulure d'aspiration est située entre la zone de sédimentation et la zone de traitement (9).

8. Station d'épuration selon au moins l'une des revendications précédentes, **caractérisée en ce que** l'élément (4) d'application d'un gaz et/ou l'élément de traitement (5) sont constitués au moins en partie par une pile de composants (14) en forme de disques, qui sont reliés entre eux selon une liaison par formes complémentaires et sont identiques entre eux ou au moins similaires.

9. Station d'épuration selon la revendication 8, **caractérisée en ce que** les composants (14) possèdent chacun respectivement au moins un connecteur (15) et un canal annulaire intérieur (16) et plusieurs barrettes, qui s'étendent radialement entre le canal annulaire extérieur (15) et le canal annulaire intérieur (16).

10. Station d'épuration selon la revendication 9, **caractérisée en ce que** les barrettes (17) débouchent dans le canal annulaire extérieur (15) et/ou dans le canal annulaire intérieur (16).

11. Station d'épuration selon les revendications 9 et 10, **caractérisée en ce que** les composants (14) possèdent au moins un évidement axial (18) à l'extérieur du canal annulaire extérieur (15).

12. Station d'épuration selon au moins l'une des revendications 9 à 11, **caractérisée en ce que** les canaux, les évidements axiaux (18) et les barrettes (17) sont séparés les uns des autres par l'intermédiaire de parois de séparation pouvant être retirées ou des barreaux de séparation pouvant être retirés ou pouvant être rompus et sont reliés entre eux par retrait ou rupture des parois de séparation (20) de sorte que seul un nombre prédéterminé des canaux, évidements (18) et barrettes (17) communiquent entre eux.

13. Station d'épuration selon au moins l'une des revendications 9 à 12, **caractérisée en ce que** les barrettes (17) possèdent une structure poreuse perméable à l'air.

14. Station d'épuration selon au moins l'une des revendications 9 à 12, **caractérisée en ce que** les composants (14) possèdent, au moins en partie au centre du canal annulaire antérieur (16), un passage (19) servant à loger un arbre médian (21) qui s'étend le long de la pile.

15. Station d'épuration selon la revendication 14, **caractérisée en ce que** des éléments agitateurs, des éléments de vis ou des pales de rotor (22), qui servent à produire un écoulement et qui s'étendent à partir de l'arbre médian (21) dans l'espace intercalaire présent entre le canal annulaire intérieur (16) et le canal annulaire extérieur (15), sont disposés sur l'arbre médian (21), dans une partie des composants (14).
